# EUROPEAN PATENT SPECIFICATION

(11) **EP 0 982 580 B1**
(45) Date of publication and mention of the grant of the patent: **22.10.2003**
(21) Application number: 99115977.3
(22) Date of filing: 13.08.1999
(51) Int. Cl.: G01N 21/21

(54) **Ellipsometer**
ELLIPSOMETER
ELLIPSOMETRE

(30) Priority: 20.08.1998 JP 23427998
(43) Date of publication of application: 01.03.2000
(73) Proprietor: Olympus Optical Co., Ltd., Tokyo (JP)
(72) Inventor: Mizoguchi, Iwao, Olympus Optical Co. Ltd., Hachioji-shi, Tokyo (JP); Aruga, Susumu, Olympus Optical Co. Ltd., Hachioji-shi, Tokyo (JP)
(74) Representative: Kuhnen & Wacker

(56) References cited:
- FR-A- 2 501 861
- US-A- 5 061 072
- PATENT ABSTRACTS OF JAPAN vol. 1997, no. 12, 25 December 1997 (1997-12-25) & JP 09 210635 A (OLYMPUS OPTICAL CO LTD), 12 August 1997 (1997-08-12)
- PATENT ABSTRACTS OF JAPAN vol. 017, no. 626 (P-1647), 18 November 1993 (1993-11-18) & JP 05 203565 A (OLYMPUS OPTICAL CO LTD), 10 August 1993 (1993-08-10)
- HEMMES K ET AL: "Evaluation of interferometric ellipsometer systems with a time resolution of one microsecond and faster" THIN SOLID FILMS,CH,ELSEVIER-SEQUOIA S.A. LAUSANNE, vol. 313-314, page 40-46 XP004132954 ISSN: 0040-6090

## Description

The present invention relates to an ellipsometer according to claim 1.

From FR 2 501 861 an ellipsometric apparatus is known in which light polarized by a polarizer is incident at one point on a sample, is reflected to a retro reflecting prism as a first beam and returned as a second beam to be incident on the sample at a different position, reflected as a third beam, and passed through a polarization analyser, separate from the incident polarizer before reaching a detector.

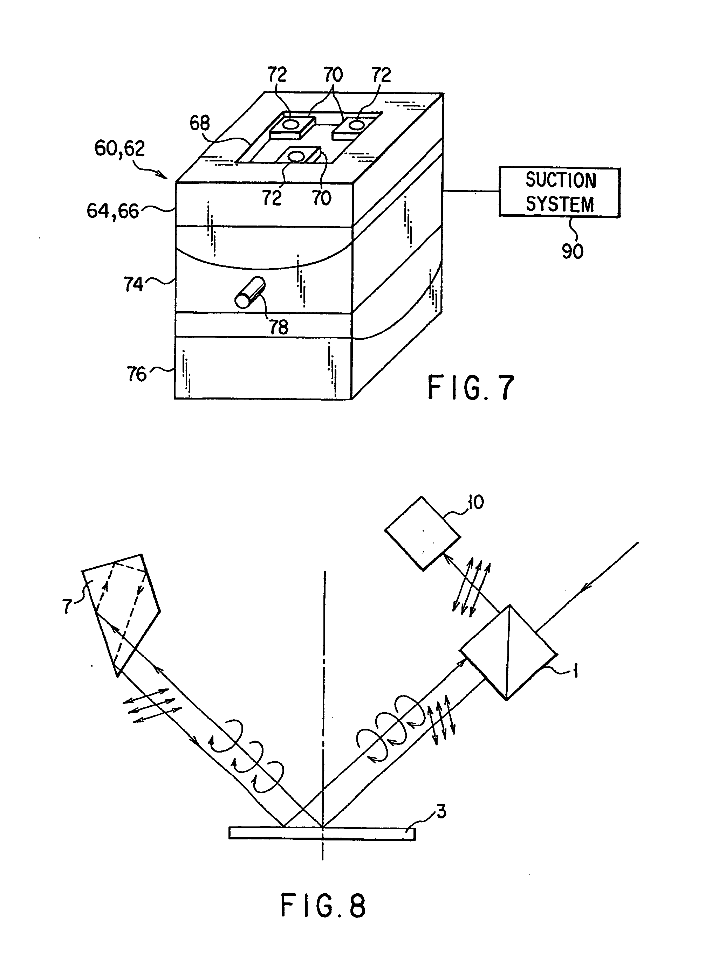

Moreover JPN PAT APPLN KOKAI PUBLICATION No. 5-203565 discloses a further conventional ellipsometer. The ellipsometer includes, as shown in FIG. 8, an optical element (for example, a polarization beam splitter) 1 having the function of both an analyzer and a polarizer, a sample support base 3 arranged at an angle of 45° with respect to an optical axis, and a λ/2 prism 7 allowing light which is reflected from the sample support base 3 to again exit toward the direction of the sample support base 3.

In such ellipsometer, light from a light source (not shown) passes through the optical element I to provide linearly polarized light inclined at an angle of +45° to an incidence surface (a plane including a normal of a wave front of light incident on the sample, i.e., the travelling direction, and a normal of the sample supporting base 3) and it is incident on the sample (not shown) on the sample support base 3. At this time, the light reflected from the sample is converted to elliptically polarized light on the basis of the optical property and film thickness of the sample and it is incident on the λ/2 prism 7. Thereafter, the light is reflected by the λ/2 prism 7 back toward the sample support base 3. The elliptically polarized light reflected back toward the sample support base 3 is reflected from another site on the sample support base 3 and then again returned back to the optical element 1. And polarization reflection components, that is, polarization reflection components of -45° with respect to the incident surface, are extracted by the optical element 1. By subjecting the -45° polarization components to electrical processing by a photoelectric detector 10, measured data is obtained on, for example, the optical property, film thickness, etc., of the sample.

However, the conventional ellipsometer has the following drawbacks.

The optical element 1 having the function of the analyzer and polarizer is poor in optical quenching ratio of the transmitted light and of the reflected light. For this reason, the polarization components extracted by the optical element 1 include not only -45° polarization components but also +45° polarization components. For this reason, the conventional ellipsometer involves a lower measurement sensitivity.

It is therefore an object of the present invention to provide an ellipsometer, which can obtain measured data having a high sensitivity and a high accuracy in reproduction, and which has an improved handling capability.

According to the present invention this object is solved by the features of claim 1.

Improved embodiments of the inventive ellipsometer result from the subclaims.

The invention can be more fully understood from the following detailed description when taken in conjunction with the accompanying drawings, in which:
FIG. 1 is a plan view showing an arrangement of an ellipsometer which is not a part of the present invention;
FIG. 2 is a side view showing the arrangement of an ellipsometer according to Fig. 1;
FIG. 3 is a perspective view showing measuring and target sample fixing bases fixing bases according to Fig.1;
FIG. 4 is a perspective view showing a structure of a reflect-back prism used on the ellipsometer of Fig.1;
FIG. 5 is a perspective view showing a structure of another reflect-back prism applicable in place of the reflect-back prism of FIG. 4;
FIG. 6 is a plan view showing an arrangement of an ellipsometer according to a second embodiment of the present invention;
FIG. 7 is a perspective view showing an arrangement of a target sample fixing base unit and measuring sample fixing base unit; and
FIG. 8 is a side view showing an arrangement of a conventional ellipsometer.

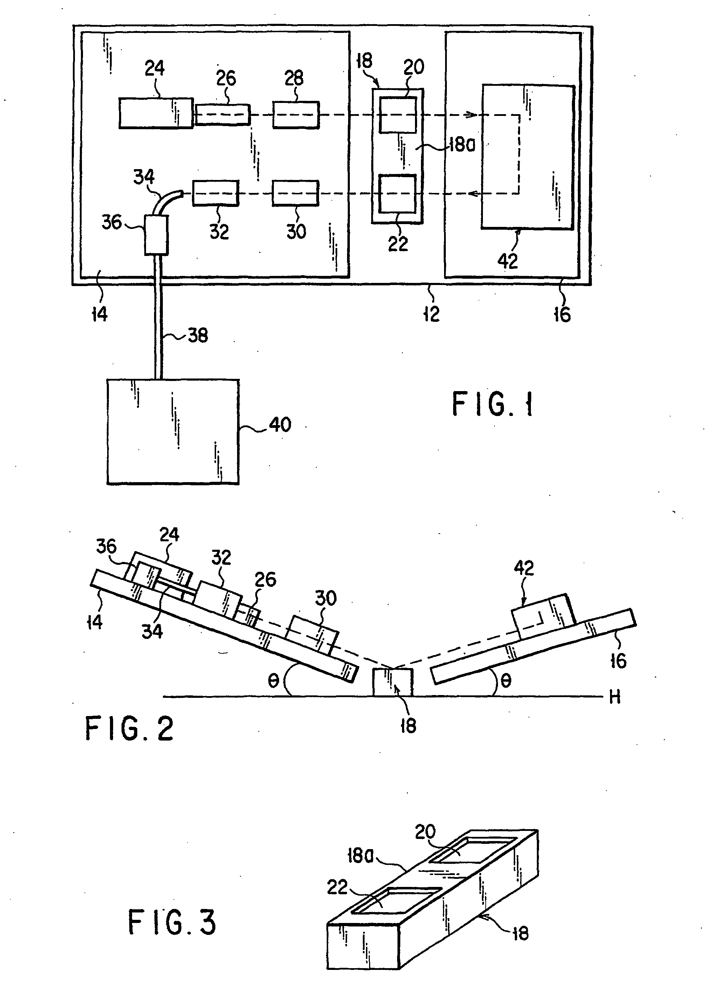

An ellipsometer will be explained below in reference to FIGS. 1 to 5.

As shown in FIGS. 1 and 2, the ellipsometer comprises first and second support bases 14 and 16, which are arranged on a base 12 in a symmetric angle θ of inclination with respect to a reference horizontal line H, and a measurement/target sample fixing base 18 between the first and second support bases 14 and 16.

The measuring/target sample fixing base 18, as shown in FIG. 3, comprises the target sample fixing section 20 and measuring sample fixing section 22 integrated each other, which configure a substantially rectangular parallelepiped. The target sample fixing section 20 and measuring sample fixing section 22 comprises recesses, which provide substantially flat sections lower than a surface 18a of the measuring/ target sample fixing base 18. A target sample and a measuring sample are fitted in the recesses in the target sample fixing section 20 and measuring sample fixing section 22, respectively, such that the samples are fixed and positioned on the measuring and target sample fixing base 18. In this connection, the target sample fixing section 20 and measuring sample fixing section 22 may be arranged in an reverse order.

The target sample fixing section 20 and measuring sample fixing section 22 positively position and closely fixed the target sample and measuring sample, which are not shown, and locate the target sample and measuring sample mutually on the same plane (horizontal plane in the Figure). In this case, in order to decrease contact areas with respect to the target sample and the measuring sample, a plurality of grooves (not shown) is preferably provided at the target sample fixing section 20 and measuring sample fixing section 22. Additionally, in order to readily detachably mount the target sample and measuring sample by, for example, tweezers, clearances (not shown) may be preferably created adjacent the target sample fixing section 20 and measuring sample fixing section 22. It is to be noted that the target sample is used as a comparison object with respect to the measuring sample in an ellipsometric process.

The ellipsometer comprises a light source 24, such as a xenon lamp, collimator lens 26 and polarizer 28 using a Glan-Thompson prism along a forward optical axis, and an analyzer 30 using a Glan-Thompson prism, objective lens 32, fiber 34 and light detecting section 36, such as a spectrum detector, along a reflect-back backward optical axis, all of which are mounted on the first base 14. The light detecting section 36 is connected via an electrical cable 38 to a control computer 40.

The light source 24 may comprises a wavelength variable type laser, such as titanium sapphire laser, dye laser, semiconductor laser, etc., instead of the xenon lamp. In this case, it is not necessary to provide a spectrum function to the light detecting section 36. Further, the collimator lens 26 is not necessarily required for use of the light source 24 other than the semiconductor laser.

The polarizer 28 is positioned so as to pass through linearly polarized light inclined at an angle of +45° with respect to an incidence surface, that is, a plane including a normal of a wave front of light incident on the target sample surface or measuring sample surface, that is, the travelling direction, and a normal of the target sample surface or measuring sample surface. The analyzer 30, on the other hand, is positioned so as to have its polarization angle displaced by 90° with respect to the polarizer 28. That is, the polarizer 28 and analyzer 30 are positioned on the first support base 14 so as to satisfy crossed Nicols.

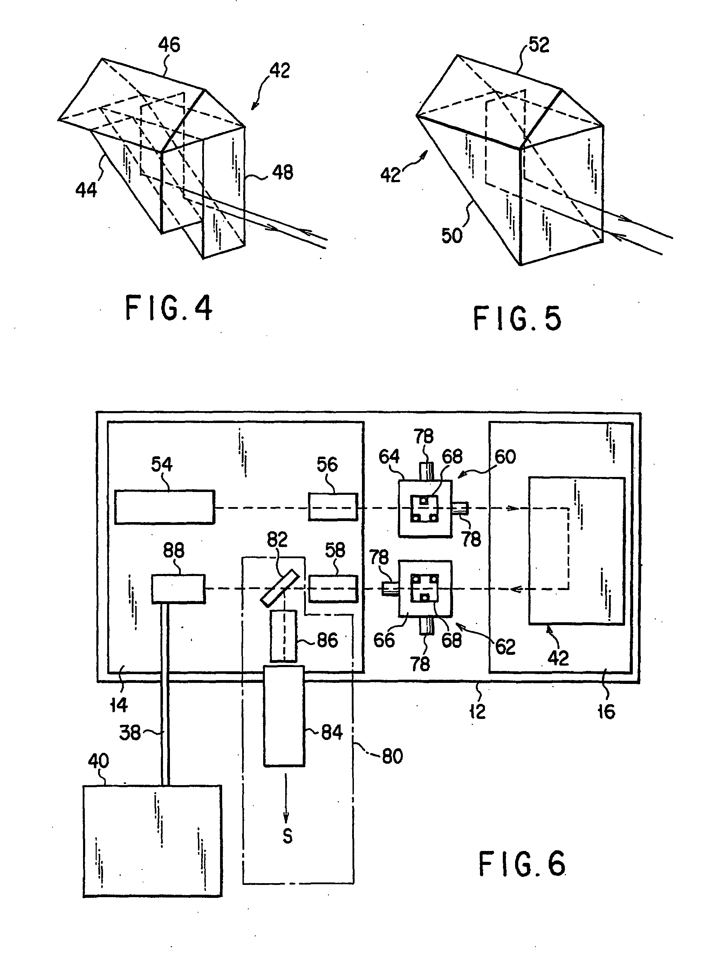

The ellipsometer also comprises a reflect-back prism 42 fixed on the second support base 16. The reflect-back prism 42 reflects back incident light, at a predetermined interval, at a proper angle of, for example 0° to 90°, preferably 0° to 60°, more preferably 0° to 30° and most preferably 0° (parallel). As shown in FIG. 4, the reflect-back prism 42 comprises three prisms 44, 46 and 48 cemented to one another. These three right-angled prisms 44, 46 and 48 are combined so that exiting light goes out the prism 42 in parallel to the incident light with an inclination angle of 45° in an up/down direction in FIG. 4. In FIG. 2, the reflect-back prism 42 is fixed at an inclined angle of 45° relative to the second support base 16 so that a plane including the optical axes of the incident light and the exiting light is parallel to the surface of the second support base 16.

Any optical element having function equivalent to the combination of the above-mentioned right-angled prisms 44, 46, 48, may be applied to the reflect-back optical element 42.

Further, the inclination of the reflection surface of the reflect-back prism 42 is not restricted to 45° and the number of times of the reflect-backs is not restricted. The inclination of a reflection surface may be only selected corresponding to the number of times of reflect-backs, so that the incident light incident on the reflect-back prism 42 and exiting light exiting from the reflect-back prism 42 maintain a non-polarized state.

If the target sample fixing section 20 and measuring sample fixing section 22 in the measuring and target sample fixing base 18 are arranged in a different height so that a line connecting two reflected points on the respective sample surfaces intersects at 45° with the sample surface, or the positions of the target sample fixing section 20 and measuring sample fixing section 22 are displaced in a horizontal direction along an incident optical axis so that a line connecting two reflected points on the respective sample surfaces is inclined at 45° with respect to a straight line along an incident optical axis on the sample surface, a reflect-back prism 42 constructed of two right-angled prisms 50, 52 cemented to each other as shown in FIG. 5 may be applied to the present ellipsometer.

The operation of the ellipsometer will be explained below.

Light emitted from the light source 24 is converted by a collimator lens 26 to parallel light and then it passes through the polarizer 28 to provide linearly polarized light inclined at +45° with respect to the incident surface, and the light is incident on the surface of the target sample fixed on the target sample fixing section 20 of the measuring and target sample fixing base 18. At this time, the linearly polarized light reflected from the target sample is converted to an elliptically polarized light on the basis of the optical properties, film thickness, etc., of the target sample. Then, the elliptically polarized light is reflected back in a parallel fashion by the reflect-back prism 42, with the magnitudes and directions of its major and minor components maintained but its rotation direction of the polarization reversed.

A reflected-back light from the reflect-back prism 42 is reflected from the measuring sample fixed on the measuring sample fixing section 22 on the measuring and target sample fixing base 18. The reflected-back light is incident on the analyzer 30 by which only a minor component of the elliptically polarized light is taken out. The minor component of the elliptically polarized light is conducted via the objective lens 32 to the light detecting section 36 where it is subjected to spectral processing and then to photoelectric conversion for each wavelength.

An electric signal output from the light detecting section 36 is taken into the control computer 40 through the electrical cable 38 and is subjected to predetermined calculation processing. And measured data on, for example, the optical properties, thickness, etc., of the sample is obtained on the basis of the result of the calculation processing. It is to be noted that the target sample and measuring sample produce an optical quenching state if being exactly the same.

Since the polarizer 28 and analyzer 30 are arranged independently to satisfy the crossed Nicols and made of Glan-Thompson prism, the optical quenching ratio of the transmitting light and receiving light is increased, as a result of that, measured data with high sensitivity will be obtained. Further since the target sample and measuring sample are positively position and closely fixed on the measuring and target sample fixing base 18, high accurate measuring data will be obtained with a better reproducibility.

Further, the polarizer 28 and analyzer 30 are separately provided and the respective optical elements and respective sample surfaces have their forward and backward optical paths set parallel to each other. Therefore, as shown in FIG. 1, the optical path length of the forward and backward optical paths from the analyzer 30 to the polarizer 28 can be made shortest.

An ellipsometer will be explained below in reference to FIGS. 6 and 7. In an explanation the same reference numerals are employed to designate parts or elements corresponding to those shown above and no further explanation is, therefore, omitted for brevity sake.

As shown in FIG. 6, the ellipsometer comprises a light source 54 using a wavelength fixed type laser such as an argon laser, and a polarizer 56 and analyzer 58, each of which uses a Glan-Thompson prism. The polarizer 56 and analyzer 58 are arranged so as to satisfy the crossed Nicols as described above.

As the light source 54 may be made use of, for example, a helium laser or a CO₂ laser or a semiconductor laser. In the use of the semiconductor laser, a collimator lens, not shown, should be arranged on an optical path, for example, between the light source 54 and the polarizer 56.

A target sample fixing base unit 60 capable of positively positioning and fixing a target sample and a measuring sample fixing base unit 62 capable of positioning and fixing a measuring sample are independently positioned on a forward and reflect-back backward optical path, respectively.

As shown in FIG. 7, the target sample fixing base unit 60 and measuring sample fixing base unit 62 have the same structure. The target sample fixing base unit 60 (measuring sample fixing base unit 62) include the target sample fixing base 64 (measuring sample fixing base 66) and a sample position adjusting mechanism for adjusting the position of the target sample (measuring sample) held to the target sample fixing base 64 (measuring sample fixing base 66).

The target sample fixing base 64 (measuring sample fixing base 66) includes a sample fixing section 68 for fixing a target sample (measuring sample) and three supports 70 supporting the target sample (measuring sample) at three points which is placed in the sample fixing section 68. These supports 70 have a suction port 72 and the target sample (measuring sample) is fixed under a suction at the three supports 70 by creating a negative pressure by a suction system 90 at the suction ports 72.

The sample position adjusting mechanism includes goniometers 74, 76 stacked below, the target sample fixing base 64 (measuring sample fixing base 66) and an adjusting screw 78 for, on the basis of the measured values of the goniometers 74, 76, adjusting the positions (for example, a rotation direction position, angle position, upper and lower horizontal positions, etc.) of the target sample (measuring sample) fixed to the target sample fixing base 64 (measuring sample fixing base 66).

In the sample position adjusting mechanism, by performing an adjustment operation of the adjusting screw 78 based on the measured values of the goniometers 74, 76, the target sample (measuring sample) fixed to the target sample fixing base 64 (measuring sample fixing base 66) is minutely rotated, minutely tilted, minutely up/down moved and minutely moved horizontally (stated in more detail, the target sample and measuring sample are arranged on the same plane).

A CCD unit 80 is arranged on a reflect-back backward optical path through a previously arranged analyzer 58. The CCD unit 80 comprises a half mirror 82 arranged on the reflect-back backward optical path downstream from the analyzer 58, a CCD camera 84, and an objective lens 86 for imaging the light reflected from the half mirror 82 onto the CCD camera 84. Image data S which is output from the CCD camera 84 is displayed onto a monitor, not shown, through a CCD adapter, not shown.

The light passed through the half-mirror 82 is converted to an electric signal by a photodiode unit 88. The electric signal is input through an electric cable 38 to a control computer 40.

Further it is preferable to provide a CCD unit 80 having a reflection mirror, not shown, of a tiltable type so as not to shade a light beam on the optical path between the target sample fixing base unit 60 and a reflect-back prism 42 or on the optical path between the reflect-back prism 42 and the measuring sample fixing base unit 62. Further it may be possible to provide, for example, an autocollimator, in place of the CCD unit 80, over the target sample fixing base 64 and measuring sample fixing base 66. In place of the photodiode unit 88 use may be made of, for example, a photomultiplier or CCD.

It is possible to adjust the position of the target sample (measuring sample) held on the target sample fixing base 64 (measuring sample fixing base 66) by the sample position adjusting mechanism, confirming image data on a monitor display through the CCD unit 80. As a result, it is possible to obtain measured data of high accuracy and better reproducibility.

Further, as the light source 54 is made use of a wavelength fixed type laser, and the polarizer 56 and analyzer 58 are independently arranged so as to satisfy the crossed Nicols and made of Glan-Thompson prism, it is possible to obtain measured data of high sensitivity.

Since the polarizer 56 and analyzer 58 are separately provided and the respective optical elements and respective sample surfaces are arranged so as to provide parallel forward and' backward optical paths, it is possible to minimize a length of the forward and backward optical paths from the polarizer 56 to the analyzer 58.

Sample position adjustment is operated as follows: Firstly, image data (for example, an imaged positions of the light) displayed on a monitor is confirmed with the first support base 14 and second support base 16 positioned on the same plane. Secondly, the first and second support bases 14 and 16 are arranged at symmetrical inclined angles θ with respect to the base horizontal line H (see FIG. 2). Thirdly, the adjusting screws 78 are adjusted based on the measured values of the goniometers 74, 76 of the sample position adjusting mechanism so that image data (for example, imaged positions of the light) displayed on the monitor coincides with the confirmed image data.

Although in the above-mentioned first and second embodiments the Glan-Thompson prisms are applied to both the analyzer and polarizer, any optical element, which has an optical quenching higher than that of a polarizer/analyzer integrated optical element, may be used instead of the Glan-Thompson prism.

## Claims

1. An ellipsometer comprising: a sample fixing mechanism (18; 60, 62) for positioning and fixing first and second samples on forward and backward optical paths; a light source for emitting light (24; 54); a polarizer (28; 56) for creating predetermined linearly polarized light from the light from the light source (24; 54) and irradiating the linearly polarized light onto the first sample; a reflect-back prism (42) for reflecting an elliptically polarized light reflected from the first sample and irradiating the elliptically polarized light the second sample; an analyzer (30; 58) being optically separated from the polarizer (28; 56); and a light detecting section (36; 88) **characterized in that**
a) said analyzer (30; 58) is formed for taking out minor axis components of the elliptically polarized light reflected from the second sample;
b) said light detecting section (56; 88) is formed for detecting the minor axis component of the elliptically polarized light taken out by the analyzer; and
c) said sample fixing mechanism (60, 62) comprises a first sample fixing base unit (60) for positioning and fixing the first sample and a second sample fixing base unit (62) for positioning and fixing the second sample, the second sample fixing base unit (62) being provided independent of the first sample fixing base unit (60).

2. An ellipsometer according to claim 1, **characterized in that** the reflect-back prism (42) reflects back the elliptically polarized light in a parallel fashion, maintaining a polarized state and reversing a rotation direction of the polarization.

3. An ellipsometer according to claim 1 or 2, **characterized in that** the first sample fixing base unit (60) and second sample fixing base unit (62) comprise a first sample fixing base (64) and second sample fixing base (66) and a first sample position adjusting mechanism (74, 76) and second sample position adjusting mechanism (74, 76) for adjusting the positions of the first and second samples fixed on a first sample fixing base (64) and second sample fixing base (66), respectively.

4. An ellipsometer according to claim 3, **characterized in that** the first sample position adjusting mechanism and second sample position adjusting mechanism comprise first and second goniometers (74, 76) stacked below the first sample fixing base (64) and second sample fixing base (66) and adjusting screws (78) for adjusting the positions of the first sample and second sample fixed on the first sample fixing base (64) and second sample fixing base (66) on measured values of the goniometers (74, 76).

## Patentansprüche

1. Ellipsometer mit: einem Probenbefestigungsmechanismus (18; 60, 62) zum Positionieren und Fixieren einer ersten und einer zweiten Probe auf einem vorwärts verlaufenden und rückwärts verlaufenden optischen Pfad; einer Lichtquelle zum Emittieren von Licht (24, 54); einem Polarisator (28; 56) zum Erzeugen eines vorbestimmten linear polarisierten Lichtes aus dem Licht von der Lichtquelle (24; 54) und zum Aufstrahlen des linear polarisierten Lichtes auf die erste Probe; einem rück-reflektierenden Prisma (42) zum Reflektieren eines elliptisch polarisierten Lichtes, welches von der ersten Probe reflektiert wurde, und zum Aufstrahlen des elliptisch polarisierten Lichtes auf die zweite Probe; einem Analysierer (30; 58), der optische von dem Polarisator (28; 56) getrennt ist; und einem Lichtdetektionsabschnitt (36; 88), **dadurch gekennzeichnet, daß**
a) der Analysierer (30; 58) dafür ausgebildet ist, um Nebenachsenkomponenten des elliptisch polarisierten Lichtes, welches von der zweiten Probe reflektiert wird, herauszugreifen;
b) der Lichtdetektionsabschnitt (56; 88) dafür ausgebildet ist, um die Nebenachsenkomponente des elliptisch polarisierten Lichtes, welches von dem Analysierer herausgegriffen wurde, zu detektieren; und
c) der Probenfixiermechanismus (60, 62) eine erste Probenfixierbasiseinheit (60) umfaßt, um die erste Probe zu positionieren und zu fixieren, und eine zweite Probenfixierbasiseinheit (62) umfaßt, um die zweite Probe zu positionieren und zu fixieren, wobei die zweite Probenfixierbasiseinheit (62) unabhängig von der ersten Probenfixierbasiseinheit (60) vorgesehen ist.

2. Ellipsometer nach Anspruch 1, **dadurch gekennzeichnet, daß** das rückreflektierende Prisma (42) das elliptisch polarisierte Licht in einer parallelen Form zurück reflektiert, und zwar unter Aufrechterhaltung eines Polarisierungszustandes und unter Umkehrung einer Drehrichtung der Polarisation.

3. Ellipsometer nach Anspruch 1 oder 2, **dadurch gekennzeichnet, daß** die erste Probenfixierbasiseinheit (60) und die zweite Probenfixierbasiseinheit (62) eine erste Probenfixierbasis (64) und eine zweite Probenfixierbasis (66) aufweisen, und auch einen ersten Probenpositionseinstellmechanismus (74, 76) und einen zweiten Probenpositionseinstellmechanismus (74, 76) zum Einstellen der Positionen der ersten und der zweiten Probe, die auf einer ersten Probenfixierbasis (64) bzw. der zweiten Probenfixierbasis (66) fixiert sind.

4. Ellipsometer nach Anspruch 3, **dadurch gekennzeichnet, daß** der erste Probenpositionseinstellmechanismus und der zweite Probenpositionseinstellmechanismus ein erstes und eines zweites Goniometer (74, 76) aufweist, welches unter der ersten Probenfixierbasis (64) und der zweiten Probenfixierbasis (66) gestapelt angeordnet ist, und Einstellschrauben (78) aufweist, um die Positionen der ersten Probe und der zweiten Probe einzustellen, die auf der ersten Probenfixierbasis (64) bzw. der zweiten Probenfixierbasis (66) fixiert sind, und zwar auf der Grundlage von Meßwerten der Goniometer (74, 76).

## Revendications

1. Ellipsomètre comprenant : un mécanisme de fixation d'échantillon (18 ; 60, 62) pour positionner et fixer un premier et un deuxième échantillons sur des chemins optiques direct et inverse ; une source de lumière pour émettre une lumière (24 ; 54) ; un polariseur (28 ; 56) pour créer une lumière linéairement polarisée prédéterminée à partir de la lumière de la source de lumière (24 ; 54) et irradier le premier échantillon avec la lumière linéairement polarisée; un prisme rétro-réflecteur (42) pour réfléchir une lumière elliptiquement polarisée, réfléchie par le premier échantillon, et irradier le deuxième échantillon avec la lumière elliptiquement polarisée ; un analyseur (30 ; 58) étant optiquement séparé du polariseur (28 ; 56) ; et une section de détection de lumière (36 ; 88),
**caractérisé en ce que** :
(a) ledit analyseur (30 ; 58) est adapté pour extraire les composantes de petit axe de la lumière elliptiquement polarisée réfléchie par le deuxième échantillon ;
(b) ladite section de détection de lumière (36 ; 88) est adaptée pour détecter la composante de petit axe de la lumière elliptiquement polarisée extraite par l'analyseur ; et
(c) ledit mécanisme de fixation d'échantillon (60 ; 62) comprend une première unité de base de fixation d'échantillon (60) pour positionner et fixer le premier échantillon et une deuxième unité de base de fixation d'échantillon (62) pour positionner et fixer le deuxième échantillon, la deuxième unité de base de fixation d'échantillon (62) étant indépendante de la première unité de base de fixation d'échantillon (60).

2. Ellipsomètre selon la revendication 1, **caractérisé en ce que** le prisme de rétro-réflexion (42) réfléchit en retour la lumière elliptiquement polarisée d'une manière parallèle, afin de maintenir un état polarisé et d'inverser un sens de rotation de la polarisation.

3. Ellipsomètre selon la revendication 1 ou 2, **caractérisé en ce que** la première unité de base de fixation d'échantillon (60) et la deuxième unité de base de fixation d'échantillon (62) comprennent une première base de fixation d'échantillon (64) et une deuxième base de fixation d'échantillon (66), et un premier mécanisme de réglage de position d'échantillon (74, 76) et un deuxième mécanisme de réglage de position d'échantillon (74, 76) pour régler les positions des premier et deuxième échantillons fixés sur une première base de fixation d'échantillon (64) et une deuxième base de fixation d'échantillon (66), respectivement.

4. Ellipsomètre selon la revendication 3, **caractérisé en ce que** le premier mécanisme de réglage de position d'échantillon et le deuxième mécanisme de réglage de position d'échantillon comprennent un premier et un deuxième goniomètres (74, 76) superposés au-dessous de la première base de fixation d'échantillon (64) et de la deuxième base de fixation d'échantillon (66), et des vis de réglage (78) pour ajuster les positions du premier échantillon et du deuxième échantillon fixés sur la première base de fixation d'échantillon (64) et la deuxième base de fixation d'échantillon (66) sur des valeurs mesurées des goniomètres (74, 76).
